(19) Europäisches Patentamt / European Patent Office / Office européen des brevets

(11) **EP 3 308 975 B1**

(12) **EUROPEAN PATENT SPECIFICATION**

(45) Date of publication and mention
of the grant of the patent:
**06.03.2019 Bulletin 2019/10**

(51) Int Cl.:
***B60C 1/00*** *(2006.01)*

(21) Application number: **17194287.3**

(22) Date of filing: **02.10.2017**

(54) **RUBBER COMPOSITION FOR STUDLESS WINTER TIRES, AND STUDLESS WINTER TIRE**

KAUTSCHUKZUSAMMENSETZUNG FÜR SPIKELOSE WINTERREIFEN UND SPIKELOSER WINTERREIFEN

COMPOSITION DE CAOUTCHOUC POUR PNEUS D'HIVER SANS CLOU ET PNEU D'HIVER SANS CLOU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2016 JP 2016200884**

(43) Date of publication of application:
**18.04.2018 Bulletin 2018/16**

(73) Proprietor: **Sumitomo Rubber Industries, Ltd.
Kobe-shi, Hyogo 651-0072 (JP)**

(72) Inventors:
• **WATANABE, Kenya**
 **Kobe-shi, Hyogo 651-0072 (JP)**
• **MIYAZAKI, Sumiko**
 **Kobe-shi, Hyogo 651-0072 (JP)**

(74) Representative: **TBK
Bavariaring 4-6
80336 München (DE)**

(56) References cited:
**EP-A1- 2 072 572     EP-A1- 2 662 405
EP-A1- 3 075 775     EP-A1- 3 095 617
US-A1- 2016 122 515**

**Description**

TECHNICAL FIELD

The present invention relates to a rubber composition for studless winter tires, and a studless winter tire formed from the rubber composition.

BACKGROUND ART

Studded tires or tire chains were used for driving on snowy and icy roads; however, they unfortunately cause environmental problems such as dust pollution. Hence, studless winter tires were developed as alternative tires for driving on snowy and icy roads. Since studless winter tires are used on snowy roads with rougher surfaces than normal roads, the material and structure of these tires are specially designed. For example, a rubber composition that contains a diene rubber having excellent low-temperature properties, and a rubber composition that contains a large amount of a softener to enhance the softening effect have been developed (for example, Patent Literature 1).

Some attempts have been made to improve performance on snow and ice of studless winter tires, for example, by increasing the amount of polybutadiene rubber in a rubber composition. However, the increase in the amount of polybutadiene rubber is limited because too high a polybutadiene rubber content leads to excessively high mobility in the rubber compound, thereby causing blooming of various chemicals. Also, when a larger amount of polybutadiene rubber is incorporated, the proportion of natural rubber in the rubber composition decreases along with the increase in the amount of polybutadiene rubber. Consequently, the resulting rubber compound unfortunately has insufficient strength and poor abrasion resistance.

Another known approach to improve performance on snow and ice of studless winter tires is to incorporate glass fibers as a scratching material into a rubber composition. However, this method may also result in a reduction in abrasion resistance, and is therefore considered to be insufficient for improving performance on snow and ice of studless winter tires.

Still other attempts include incorporating bionanofibers into a rubber composition for studless winter tires (for example, Patent Literature 2). This method improves performance on snow and ice, but there is still room for improvement in abrasion resistance.

CITATION LIST

PATENT LITERATURE

Patent Literature 1: JP 2009-091482 A
Patent Literature 2: JP 2015-174952 A

SUMMARY OF INVENTION

TECHNICAL PROBLEM

The present invention has been made in view of the above circumstances, and aims to provide a rubber composition for studless winter tires that can improve not only performance on snow and ice but also abrasion resistance, thereby simultaneously achieving excellent performance on snow and ice and excellent abrasion resistance, and also provide a studless winter tire formed from the rubber composition.

SOLUTION TO PROBLEM

The present invention relates to a rubber composition for studless winter tires, containing: a rubber component; a chemically modified microfibrillated cellulose; carbon black; and silica, the chemically modified microfibrillated cellulose having an average fiber diameter of 0.1 $\mu$m or less, the rubber component having a combined amount of natural rubber and polybutadiene rubber of 30% to 100% by mass based on 100% by mass of the rubber component, the rubber composition containing, per 100 parts by mass of the rubber component, 1 to 10 parts by mass of the chemically modified microfibrillated cellulose, 10 to 80 parts by mass of the carbon black, and 10 to 80 parts by mass of the silica.

The chemically modified microfibrillated cellulose preferably has an average fiber diameter of 0.05 $\mu$m or less.

The chemically modified microfibrillated cellulose is preferably produced by at least one chemical modification selected from the group consisting of acetylation, alkyl esterification, complex esterification, β-ketoesterification, alkyl carbamation, and aryl carbamation.

The rubber component preferably includes, based on 100% by mass of the rubber component, 30% to 85% by mass of natural rubber and 10% to 70% by mass of polybutadiene rubber.

The present invention also relates to a studless winter tire, including a cap tread formed from the rubber composition for studless winter tires.

## ADVANTAGEOUS EFFECTS OF INVENTION

The rubber composition for studless winter tires of the present invention contains predetermined amounts of a rubber component having a predetermined combined amount of natural rubber and polybutadiene rubber, a chemically modified microfibrillated cellulose having a predetermined average fiber diameter, carbon black, and silica. Such a rubber composition can improve not only performance on snow and ice (grip performance on snow and ice) but also abrasion resistance. Thus, the present invention can provide a rubber composition for studless winter tires which simultaneously achieves excellent performance on snow and ice and excellent abrasion resistance, and a studless winter tire formed from the rubber composition which is excellent in performance on snow and ice and abrasion resistance.

## DESCRIPTION OF EMBODIMENTS

The rubber composition for studless winter tires of the present invention contains a rubber component having a predetermined combined amount of natural rubber and polybutadiene rubber, and a predetermined amount of a chemically modified microfibrillated cellulose having an average fiber diameter of 0.1 μm or less. Due to the incorporation of the chemically modified microfibrillated cellulose having a very small average fiber diameter of 0.1 μm or less in the rubber composition, nano-scale water channels can be formed on tire surfaces, which improve not only performance on snow and ice (grip performance on snow and ice) but also abrasion resistance, thereby simultaneously achieving excellent performance on snow and ice and excellent abrasion resistance. Furthermore, the present invention involves the incorporation of natural rubber and/or polybutadiene rubber having excellent low-temperature properties with the chemically modified microfibrillated cellulose to synergistically improve performance on snow and ice.

In the present invention, the combined amount of natural rubber (NR) and polybutadiene rubber (BR) based on 100% by mass of the rubber component is 30% to 100% by mass. The incorporation of either NR or BR is sufficient in the present invention. In order to more suitably achieve the effects of the present invention, the rubber component preferably includes BR, more preferably a combination of NR and BR. The lower limit of the combined amount is preferably 60% by mass or more, more preferably 80% by mass or more.

Examples of the NR include commonly used NR, such as TSR20 and RSS#3.

In order to better achieve the effects of the present invention, the amount of NR based on 100% by mass of the rubber component is preferably 30% by mass or more, more preferably 40% by mass or more, but preferably 85% by mass or less, more preferably 75% by mass or less, still more preferably 70% by mass or less, particularly preferably 60% by mass or less.

Non-limiting examples of the BR include: high-cis BR, such as BR730 and BR51 both available from JSR Corporation, BR1220 available from Zeon Corporation, and BR130B, BR150B, and BR710 all available from Ube Industries, Ltd.; and low-cis BR, such as BR1250H available from Zeon Corporation. These types of BR may be used alone, or two or more of these may be used in combination.

The BR preferably has a cis content of 80% by mass or more, more preferably 85% by mass or more, still more preferably 90% by mass or more, particularly preferably 95% by mass or more. With such a BR, better performance on snow and ice can be obtained.

The cis content herein is determined by infrared absorption spectrum analysis.

In order to better achieve the effects of the present invention, the amount of BR based on 100% by mass of the rubber component is preferably 10% by mass or more, more preferably 20% by mass or more, still more preferably 30% by mass or more, particularly preferably 40% by mass or more. The amount is also preferably 70% by mass or less, more preferably 60% by mass or less. In cases where the amount is more than 70% by mass, the performance on snow and ice (grip performance on snow and ice) may be inferior, though good abrasion resistance is obtained.

Examples of materials that can be used as the rubber component other than NR and BR in the present invention include polyisoprene rubber (IR), styrene-butadiene copolymer rubber (SBR), butadiene-isoprene copolymer rubber, and butyl rubber.

The microfibrillated cellulose used as a raw material of the chemically modified microfibrillated cellulose in the present invention is not particularly limited. Preferred examples include those derived from naturally-occurring materials, such as wood, bamboo, hemp, jute, kenaf, crop waste, cloth, recycled pulp, waste paper, bacterial cellulose, and ascidian cellulose. These microfibrillated celluloses may be used alone, or two or more of these may be used in combination.

In the present invention, the term "microfibrillated cellulose" typically refers to cellulose fibers having a microstructure with an average fiber diameter of 0.1 μm or less, formed by aggregation of cellulose molecules. Typically, for example, the microfibrillated cellulose is formed of aggregates of cellulose fibers having an average fiber diameter as indicated above.

The microfibrillated cellulose may be produced by any method, such as for example by chemically treating the raw material of microfibrillated cellulose with sodium hydroxide or other chemicals, and mechanically grinding or beating the treated material using a refiner, a twin screw kneader (twin screw extruder), a twin screw kneading extruder, a high pressure homogenizer, a media agitating mill, a stone mill, a grinder, a vibration mill, a sand grinder, or other machines. Other methods include ultra high pressure treatment of the raw material of microfibrillated cellulose. In these methods, since lignin is separated from the raw material by chemical treatment, substantially lignin-free microfibrillated cellulose can be produced.

The chemically modified microfibrillated cellulose used in the present invention is produced by chemically modifying the raw material microfibrillated cellulose.

Examples of the chemical modification process of microfibrillated cellulose include esterification, etherification, acetalization, and other treatments. Specific preferred examples include acylation such as acetylation, cyanoethylation, amination, sulfonic esterification, phosphoric esterification, alkyl esterification, alkyl etherification, complex esterification, β-ketoesterification, alkylation such as butylation, and chlorination. In particular, acetylation is advantageous in terms of cost due to its reaction simplicity, and is also preferred because the effects of the present invention can be more suitably achieved, and also because highly safe chemicals are used.

In the case of amination, when, for example, the aminated microfibrillated cellulose is combined with an epoxidized rubber which is highly reactive with amino groups as a rubber component to react the amino groups with the epoxidized rubber, the effects of the present invention can be more suitably achieved.

Alkyl esterification, complex esterification, and β-ketoesterification, which are modification processes involving ester bonds like acetylation, are simple reactions like acetylation, and thus these processes are advantageous in terms of cost. In particular, the β-ketoesterification process is industrially suitable also because alkyl ketene dimer derivatives are currently used as sizing agents for cellulose.

Other examples of the chemical modification process of microfibrillated cellulose include alkyl carbamation and aryl carbamation. Alkyl carbamation and aryl carbamation are considered suitable for practical use because the modifiers used are highly reactive isocyanate compounds, and also because cellulose materials modified by these processes are used as column packing materials for optical resolution.

Thus, in another suitable embodiment of the present invention, the chemically modified microfibrillated cellulose is produced by at least one chemical modification selected from the group consisting of acetylation, alkyl esterification, complex esterification, β-ketoesterification, alkyl carbamation, and aryl carbamation.

Such chemically modified microfibrillated celluloses may be used alone or in combinations of two or more. In embodiments in which two or more chemically modified microfibrillated celluloses are used in combination, they may be, for example, a combination of chemically modified microfibrillated celluloses that differ in chemical modification process, microfibrillated cellulose raw material, average fiber diameter, or other conditions.

The chemically modified microfibrillated cellulose preferably has been chemically modified to have a degree of substitution within the range of 0.2 to 2.5. The term "degree of substitution" refers to the average number of cellulosic hydroxyl groups substituted with other functional groups by chemical modification per glucose ring unit, and the theoretical maximum is three. With a degree of substitution of at least 0.2 but not more than 2.5, the effects of the present invention can be more suitably achieved. The degree of substitution is more preferably within the range of 0.3 to 2.5, still more preferably within the range of 0.5 to 2.3, particularly preferably within the range of 0.5 to 2.0.

In cases where a combination of two or more chemically modified microfibrillated celluloses is used, the degree of substitution is calculated as an average of all the chemically modified microfibrillated celluloses.

The degree of substitution of the chemically modified microfibrillated cellulose can be determined by, for example, titration using 0.5 N NaOH and 0.2 N HCl, NMR, or infrared absorption spectrometry.

In the present invention, the chemically modified microfibrillated cellulose may particularly preferably be an acetylated microfibrillated cellulose (cellulose acetate) having a degree of substitution within the range of 0.3 to 2.5. The acetylated microfibrillated cellulose preferably has a degree of substitution within the range of 0.5 to 2.3, more preferably within the range of 0.7 to 2.0.

In the case where the chemically modified microfibrillated cellulose is an alkyl esterificated microfibrillated cellulose, it preferably has a degree of substitution within the range of 0.3 to 2.3; in the case of a complex esterificated microfibrillated cellulose, the degree of substitution is preferably within the range of 0.4 to 2.3; in the case of a β-ketoesterificated microfibrillated cellulose, the degree of substitution is preferably within the range of 0.3 to 2.3; in the case of an alkyl carbamated microfibrillated cellulose, the degree of substitution is preferably within the range of 0.3 to 2.3; and in the case of an aryl carbamated microfibrillated cellulose, the degree of substitution is preferably within the range of 0.3 to 2.3.

The acetylation may be carried out, for example, by adding acetic acid, concentrated sulfuric acid, and acetic anhydride to microfibrillated cellulose to react them. More specifically, it may be carried out by conventional methods that include, for example, reacting microfibrillated cellulose with acetic anhydride in a solvent mixture of acetic acid and toluene in the presence of a sulfuric acid catalyst to cause an acetylation reaction, and subsequently replacing the solvent with water.

The amination may be carried out, for example, by subjecting microfibrillated cellulose to tosyl esterification, followed by a reaction with an alkylamine in an alcohol for nucleophilic substitution.

The sulfonic esterification may be carried out by, for example, a simple procedure that only includes dissolving cellulose in sulfuric acid and introducing the solution into water. It may also be carried out by treatment with sulfuric anhydride gas, treatment with chlorosulfonic acid and pyridine, or other methods.

The phosphoric esterification may be carried out, for example, by treating microfibrillated cellulose with dimethylamine or other chemicals and subsequently with phosphoric acid and urea.

The alkyl esterification may be carried out by, for example, a Schotten-Baumann method in which microfibrillated cellulose is reacted with a carboxylic acid chloride under basic conditions. The alkyl etherification may be carried out by, for example, a Willamson method in which microfibrillated cellulose is reacted with an alkyl halide under basic conditions.

The chlorination may be carried out, for example, by adding thionyl chloride to microfibrillated cellulose in dimethylformamide (DMF), followed by heating.

The complex esterification may be carried out, for example, by reacting microfibrillated cellulose with two or more carboxylic anhydrides or carboxylic acid chlorides under basic conditions.

The $\beta$-ketoesterification may be carried out, for example, by reacting microfibrillated cellulose with a diketene or an alkyl ketene dimer. Alternatively, it may be carried out by a transesterification reaction between microfibrillated cellulose and a $\beta$-ketoester compound such as an alkyl acetoacetate.

The alkyl carbamation may be carried out, for example, by reacting microfibrillated cellulose with an alkyl isocyanate in the presence of a basic catalyst or a tin catalyst.

The aryl carbamation may be carried out, for example, by reacting microfibrillated cellulose with an aryl isocyanate in the presence of a basic catalyst or a tin catalyst.

The chemically modified microfibrillated cellulose has an average fiber diameter of 0.1 $\mu$m or less. By using such a chemically modified microfibrillated cellulose having a very small average fiber diameter, nano-scale water channels can be formed on tire surfaces, which improve not only performance on snow and ice (grip performance on snow and ice) but also abrasion resistance, thereby simultaneously achieving excellent performance on snow and ice and excellent abrasion resistance. In contrast, with cellulose having an average fiber diameter of more than 0.1 $\mu$m, the tires may have greatly reduced abrasion resistance and, further, the water channels formed on the tire surfaces may be wider and deeper and thus fail to remove a thin water film on ice, thereby resulting in greatly reduced performance on snow and ice. The average fiber diameter of the chemically modified microfibrillated cellulose is preferably 0.05 $\mu$m or less, more preferably 0.03 $\mu$m or less. The lower limit of the average fiber diameter of the chemically modified microfibrillated cellulose is not particularly limited, but is preferably 4 nm or more, more preferably 10 nm or more, because the entangled fibrils of such a chemically modified microfibrillated cellulose are less likely to be separated from each other and thus less likely to be dispersed.

The chemically modified microfibrillated cellulose preferably has an average fiber length of 5 mm or less, more preferably 1 mm or less, but preferably 1 $\mu$m or more, more preferably 50 $\mu$m or more. When the chemically modified microfibrillated cellulose has an average fiber length of less than the lower limit or more than the upper limit, it shows the same tendencies as described for the average fiber diameter.

In cases where a combination of two or more chemically modified microfibrillated celluloses is used, the average fiber diameter and the average fiber length are each calculated as an average of all the chemically modified microfibrillated celluloses.

The average fiber diameter and average fiber length of the chemically modified microfibrillated cellulose can be measured by, for example, image analysis of scanning electron micrographs, image analysis of transmission micrographs, X-ray scattering data analysis, or aperture impedance method (Coulter principle).

The chemically modified microfibrillated cellulose is essential in the present invention. In addition to the chemically modified microfibrillated cellulose, non-chemically modified microfibrillated cellulose (e.g. microfibrillated cellulose used as a raw material of the chemically modified microfibrillated cellulose in the present invention) may be used in combination as long as the effects of the present invention are not impaired.

The amount of the chemically modified microfibrillated cellulose per 100 parts by mass of the rubber component is 1 part by mass or more, preferably 1.5 parts by mass or more, more preferably 2 parts by mass or more, still more preferably 3 parts by mass or more, particularly preferably 5 parts by mass or more. Also, the amount is 10 parts by mass or less, preferably 9 parts by mass or less, more preferably 8 parts by mass or less. In cases where the amount is less than 1 part by mass, the effects of the present invention may not be sufficiently exerted. In cases where the amount is more than 10 parts by mass, the resulting tires may have poor abrasion resistance, and may have greatly increased hardness, adversely resulting in reduced performance on snow and ice.

The rubber composition of the present invention contains carbon black. The incorporation of carbon black provides a reinforcing effect.

The carbon black preferably has a nitrogen adsorption specific surface area ($N_2SA$) of 50 $m^2$/g or more, more preferably 90 $m^2$/g or more. Carbon black having a $N_2SA$ of less than 50 $m^2$/g may fail to provide sufficient reinforcing properties, thereby resulting in insufficient abrasion resistance or performance on snow and ice. The $N_2SA$ is preferably 180 $m^2$/g or less, more preferably 130 $m^2$/g or less. Carbon black having a $N_2SA$ of more than 180 $m^2$/g tends to be difficult to disperse, thereby resulting in poor abrasion resistance.

The $N_2SA$ of the carbon black is determined in accordance with JIS K 6217-2:2001.

The carbon black preferably has a dibutyl phthalate oil absorption (DBP) of 50 mL/100 g or more, more preferably 100 mL/100 g or more. Carbon black having a DBP of less than 50 mL/100 g may fail to provide sufficient reinforcing properties, thereby resulting in insufficient abrasion resistance or performance on snow and ice. The DBP of the carbon black is also preferably 200 mL/100 g or less, more preferably 135 mL/100 g or less. Carbon black having a DBP of more than 200 mL/100 g may reduce processability or abrasion resistance.

The DBP of the carbon black is determined in accordance with JIS K 6217-4:2001.

The amount of carbon black per 100 parts by mass of the rubber component is 10 parts by mass or more, preferably 20 parts by mass or more. The use of less than 10 parts by mass of carbon black tends not to provide sufficient reinforcing properties, thereby resulting in insufficient abrasion resistance or performance on snow and ice. The amount is 80 parts by mass or less, preferably 60 parts by mass or less, more preferably 40 parts by mass or less. More than 80 parts by mass of carbon black tends to show poor dispersibility, thereby resulting in poor abrasion resistance.

The rubber composition of the present invention contains silica. The incorporation of silica provides a reinforcing effect. Examples of the silica include dry silica (anhydrous silica) and wet silica (hydrous silica). Wet silica is preferred among these because it contains a large number of silanol groups.

The silica preferably has a nitrogen adsorption specific surface area ($N_2SA$) of 40 $m^2$/g or more, more preferably 70 $m^2$/g or more, still more preferably 110 $m^2$/g or more. Silica having a $N_2SA$ of less than 40 $m^2$/g may fail to provide sufficient reinforcing properties, thereby resulting in insufficient abrasion resistance or performance on snow and ice. The $N_2SA$ of the silica is also preferably 220 $m^2$/g or less, more preferably 200 $m^2$/g or less. Silica having a $N_2SA$ of more than 220 $m^2$/g may be difficult to disperse, thereby resulting in poor abrasion resistance.

The $N_2SA$ of the silica is determined by the BET method in accordance with ASTM D3037-93.

The amount of silica per 100 parts by mass of the rubber component is 10 parts by mass or more, preferably 20 parts by mass or more. The use of less than 10 parts by mass of silica tends not to provide sufficient reinforcing properties, thereby resulting in insufficient abrasion resistance or performance on snow and ice. The amount is 80 parts by mass or less, preferably 60 parts by mass or less, more preferably 40 parts by mass or less. More than 80 parts by mass of silica tends to show poor dispersibility, thereby resulting in poor abrasion resistance.

The rubber composition of the present invention preferably contains a silane coupling agent together with the silica.

Any silane coupling agent conventionally used in combination with silica in the rubber industry can be used. Examples include sulfide silane coupling agents such as bis(3-triethoxysilylpropyl)disulfide, mercapto silane coupling agents such as 3-mercaptopropyltrimethoxysilane, vinyl silane coupling agents such as vinyltriethoxysilane, amino silane coupling agents such as 3-aminopropyltriethoxysilane, glycidoxy silane coupling agents such as γ-glycidoxypropyltriethoxysilane, nitro silane coupling agents such as 3-nitropropyltrimethoxysilane, and chloro silane coupling agents such as 3-chloropropyltrimethoxysilane. Preferred among these are sulfide silane coupling agents, with bis(3-triethoxysilylpropyl)disulfide being more preferred.

The amount of the silane coupling agent per 100 parts by mass of silica is preferably 1 part by mass or more, more preferably 3 parts by mass or more. The use of less than 1 part by mass of the silane coupling agent may fail to provide sufficient reinforcing properties, thereby resulting in insufficient abrasion resistance or performance on snow and ice. The amount of the silane coupling agent is also preferably 15 parts by mass or less, more preferably 10 parts by mass or less. The use of more than 15 parts by mass of the silane coupling agent tends not to produce an effect proportional to the increase in the cost.

The rubber composition of the present invention preferably contains an oil. The incorporation of an oil reduces the hardness of the rubber compound, thereby resulting in better performance on snow and ice.

The oil may be, for example, a process oil, vegetable fat or oil, or a mixture thereof. Examples of the process oil include paraffinic process oils, naphthenic process oils, and aromatic process oils (aromatic oils). Examples of the vegetable fat or oil include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil.

The amount of the oil per 100 parts by mass of the rubber component is preferably 5 parts by mass or more, more preferably 10 parts by mass or more, still more preferably 20 parts by mass or more. In cases where the amount is less than 5 parts by mass, sufficient performance on snow and ice may not be obtained. The amount of the oil is also preferably 80 parts by mass or less, more preferably 60 parts by mass or less, still more preferably 50 parts by mass or less. In cases where the amount is more than 80 parts by mass, poor abrasion resistance may be obtained.

The rubber composition of the present invention may appropriately incorporate compounding agents generally used in the tire industry, in addition to the above components. Examples of such compounding agents include waxes, stearic acid, zinc oxide, antioxidants, vulcanizing agents such as sulfur, and vulcanization accelerators.

Examples of such vulcanization accelerators include sulfenamide, thiazole, thiuram, thiourea, guanidine, dithiocarbamate, aldehyde-amine or aldehyde-ammonia, imidazoline, and xanthate vulcanization accelerators. These vulcanization accelerators may be used alone, or two or more of these may be used in combination. Among these, sulfenamide vulcanization accelerators are preferred to more suitably achieve the effects of the present invention. More preferred are combinations of sulfenamide vulcanization accelerators and guanidine vulcanization accelerators such as diphenylguanidine.

Examples of such sulfenamide vulcanization accelerators include N-tert-butyl-2-benzothiazolylsulfenamide (TBBS), N-cyclohexyl-2-benzothiazolylsulfenamide (CBS), and N,N-dicyclohexyl-2-benzothiazolylsulfenamide (DCBS). Among these, CBS is preferred to more suitably achieve the effects of the present invention. More preferred are combinations of CBS with guanidine vulcanization accelerators such as diphenylguanidine.

The rubber composition of the present invention can be prepared by usual methods. Specifically, for example, the above components may be kneaded with a Banbury mixer, a kneader, an open roll mill, or other kneading machines and then vulcanized to prepare a rubber composition.

The rubber composition of the present invention can be suitably used in various components of studless winter tires, and especially in treads (cap treads). Thus, another aspect of the present invention is a studless winter tire including a cap tread formed from the rubber composition for studless winter tires of the present invention.

The studless winter tire of the present invention can be manufactured by usual methods using the rubber composition described above. Specifically, an unvulcanized rubber composition incorporating the rubber component, chemically modified microfibrillated cellulose, carbon black, and silica, and optionally the above-described various compounding agents is extruded and processed into the shape of, for example, a tread, and assembled with other tire components on a tire building machine in a usual manner to build an unvulcanized tire, which is then heated and pressurized in a vulcanizer, whereby a studless winter tire of the present invention can be produced.

The studless winter tire of the present invention can be suitably used for passenger vehicles.

EXAMPLES

The present invention is specifically described referring to examples, but is not limited to these examples.

The chemicals used in the examples and comparative examples are listed below.

Natural rubber: RSS#3
Polybutadiene rubber: BR1220 (cis content: 96% by mass) available from Zeon Corporation
Carbon black: Seast N220 ($N_2SA$: 114 $m^2$/g, DBP: 114 mL/100 g) available from Mitsubishi Chemical Corporation
Silica: Ultrasil VN3 ($N_2SA$: 175 $m^2$/g, average primary particle size: 15 nm) available from Evonik Degussa
Silane coupling agent: Si75 (bis(3-triethoxysilylpropyl)disulfide) available from Evonik Degussa
Microfibrillated cellulose 1: Celish KY-100G (average fiber length: 0.5 mm, average fiber diameter: 0.02 $\mu$m, solid content: 10% by mass) available from Daicel FineChem Ltd.
Chemically modified microfibrillated cellulose 1: acetylated product (solid content: 10% by mass, moisture content: 90% by mass, average fiber length: 0.5 mm, average fiber diameter: 0.02 $\mu$m) prepared by 67 mol% acetylation (degree of substitution: 1.7) of microfibrillated cellulose 1
Oil: Process X-140 (aromatic oil) available from JX Nippon Oil & Energy Corporation
Wax: Sunnoc N available from Ouchi Shinko Chemical Industrial Co., Ltd.
Zinc oxide: zinc oxide #1 available from Mitsui Mining and Smelting Co., Ltd.
Stearic acid: stearic acid "Tsubaki" available from NOF Corporation
Antioxidant: Antigene 6C (N-(1,3-dimethylbutyl)-N'-phenyl-p-phenylenediamine) available from Sumitomo Chemical Co., Ltd.
Sulfur: Powdered sulfur available from Karuizawa Sulfur
Vulcanization accelerator 1: Nocceler CZ (N-cyclohexyl-2-benzothiazolylsulfenamide) available from Ouchi Shinko Chemical Industrial Co., Ltd.
Vulcanization accelerator 2: Nocceler D (N,N'-diphenylguanidine) available from Ouchi Shinko Chemical Industrial Co., Ltd.

(Examples and Comparative Examples)

The materials in the formulation amounts shown in Table 1, excluding the sulfur and the vulcanization accelerators, were kneaded using a 1.7 L Banbury mixer (available from Kobe Steel, Ltd.) at about 150°C for 5 minutes to provide a kneaded mixture (depending on the formulation, the oil was introduced in two portions during the kneading). Then, the sulfur and vulcanization accelerators in the formulation amounts shown in Table 1 were added to the kneaded mixture, and they were kneaded using an open roll mill at about 80°C for 3 minutes to obtain an unvulcanized rubber composition. The unvulcanized rubber composition was formed into a tread shape and assembled with other tire components on a tire building machine to build an unvulcanized tire. The unvulcanized tire was vulcanized at 170°C for 15 minutes to prepare a test studless winter tire (size: 195/65R15).

The test studless winter tires prepared as above were evaluated as follows. Table 1 shows the results.

(Hardness [Hs])

The hardness of the rubber composition cut out of the tread of each test studless winter tire was measured using a type A durometer at -10°C in accordance with JIS K 6253. The hardnesses are expressed as an index, with Comparative Example 1 set equal to 100. A higher index indicates a higher hardness.

(Surface observation)

The test studless winter tires were mounted on a front-engine, front-wheel-drive car made in Japan. After the car was driven 200 km on dry asphalt, a rubber composition sample was taken from the tread of the test tires, and the rubber surface was observed with a TEM. The percentage of water channels (B) was calculated using the equation below, where A is the area ($\mu m^2$) of water channels within a 100 $\mu m$ × 100 $\mu m$ visual field.

$$B(\%) = (A/10,000) \times 100$$

A larger value indicates a greater proportion of water channels.

(Performance on snow and ice)

The test studless winter tires were mounted on a front-engine, rear-wheel-drive car of 2,000 cc displacement made in Japan. The car was driven on snow and ice under the conditions described below to evaluate the performance on snow and ice. Specifically, for evaluation of performance on snow and ice, the car was driven on snow or ice, and the brakes that lock up were applied at 30 km/h. Then, the stopping distance (brake stopping distance on snow or ice), which was the distance required for the car to stop after the braking, was measured and expressed as an index using the equation below. A higher index indicates better grip performance on snow and ice.

$$\text{(Braking performance index)} = \text{(Brake stopping distance in Comparative Example 1)}/\text{(Brake stopping distance in each formulation example)} \times 100$$

|  | (on ice) | (on snow) |
|---|---|---|
| Test place: | Test track in Nayoro, Hokkaido | Test track in Nayoro, Hokkaido |
| Temperature: | -6°C to -1°C | -10°C to -2°C |

(Abrasion resistance)

The test studless winter tires were mounted on a front-engine, front-wheel-drive car made in Japan. The depth of the grooves on the tire tread part was measured after 8,000 km mileage. A distance that decreased the depth of the tire grooves by 1 mm was calculated and expressed as an index using the equation below. A higher index indicates better abrasion resistance.

(Abrasion resistance index) = (Distance that decreased groove depth by 1 mm)/(Distance that decreased tire groove depth by 1 mm in Comparative Example 1) × 100

[Table 1]

| | | Comparative Example | | | | Example | | |
|---|---|---|---|---|---|---|---|---|
| | | 1 | 2 | 3 | 4 | 1 | 2 | 3 |
| Formulation (parts by mass) | Natural rubber | 50 | 50 | 50 | 50 | 50 | 50 | 50 |
| | Polybutadiene rubber | 50 | 50 | 50 | 50 | 50 | 50 | 50 |
| | Carbon black | 30 | 30 | 30 | 30 | 30 | 30 | 30 |
| | Silica | 30 | 30 | 30 | 30 | 30 | 30 | 30 |
| | Silane coupling agent | 2 | 2 | 2 | 2 | 2 | 2 | 2 |
| | Microfibrillated cellulose 1 | — | 5 | — | — | — | — | — |
| | Chemically modified microfibrillated cellulose 1 | — | — | 0.5 | 15 | 5 | 2 | 8 |
| | Oil | 40 | 40 | 40 | 40 | 40 | 40 | 40 |
| | Wax | 2 | 2 | 2 | 2 | 2 | 2 | 2 |
| | Antioxidant | 2 | 2 | 2 | 2 | 2 | 2 | 2 |
| | Stearic acid | 2 | 2 | 2 | 2 | 2 | 2 | 2 |
| | Zinc oxide | 2 | 2 | 2 | 2 | 2 | 2 | 2 |
| | Sulfur | 1.5 | 1.5 | 1.5 | 1.5 | 1.5 | 1.5 | 1.5 |
| | Vulcanization accelerator 1 | 2 | 2 | 2 | 2 | 2 | 2 | 2 |
| | Vulcanization accelerator 2 | 2 | 2 | 2 | 2 | 2 | 2 | 2 |
| Evaluation | Hs (−10°C) | 100 | 103 | 100 | 126 | 103 | 102 | 105 |
| | Percentage of water channels (%) | 0 | 35 | 2 | 52 | 36 | 15 | 48 |
| | Performance on snow and ice | 100 | 115 | 100 | 99 | 114 | 108 | 120 |
| | Abrasion resistance | 100 | 98 | 100 | 100 | 105 | 103 | 106 |

Table 1 demonstrates that in the examples using predetermined amounts of a rubber component having a predetermined combined amount of natural rubber and polybutadiene rubber, a chemically modified microfibrillated cellulose having a predetermined average fiber diameter, carbon black, and silica, not only performance on snow and ice (grip performance on snow and ice) but also abrasion resistance were improved, and therefore excellent performance on snow and ice and excellent abrasion resistance were simultaneously achieved. In contrast, performance on snow and ice was improved but abrasion resistance was not improved in Comparative Example 2 in which non-chemically modified microfibrillated cellulose was used instead of the chemically modified microfibrillated cellulose.

Provided are a rubber composition for studless winter tires that can improve not only performance on snow and ice but also abrasion resistance, thereby simultaneously achieving excellent performance on snow and ice and excellent abrasion resistance, and a studless winter tire formed from the rubber composition. The rubber composition for studless winter tires contains: a rubber component; a chemically modified microfibrillated cellulose; carbon black; and silica, the chemically modified microfibrillated cellulose having an average fiber diameter of 0.1 μm or less, the rubber component having a combined amount of natural rubber and polybutadiene rubber of 30-100% by mass based on 100% by mass of the rubber component, the rubber composition containing, per 100 parts by mass of the rubber component, 1-10 parts by mass of the chemically modified microfibrillated cellulose, 10-80 parts by mass of the carbon black, and 10-80 parts by mass of the silica.

Claims

1. A studless winter tire, comprising a cap tread formed from a rubber composition for studless winter tires, the rubber composition comprising:

   a rubber component;
   a chemically modified microfibrillated cellulose;
   carbon black; and
   silica,
   the chemically modified microfibrillated cellulose having an average fiber diameter of 0.1 μm or less,
   the rubber component having a combined amount of natural rubber and polybutadiene rubber of 30% to 100% by mass based on 100% by mass of the rubber component,
   the rubber composition comprising, per 100 parts by mass of the rubber component, 1 to 10 parts by mass of the chemically modified microfibrillated cellulose, 10 to 80 parts by mass of the carbon black, and 10 to 80 parts by mass of the silica.

2. The studless winter tire according to claim 1,
   wherein the chemically modified microfibrillated cellulose has an average fiber diameter of 0.05 μm or less.

3. The studless winter tire according to claim 1 or 2,
   wherein the chemically modified microfibrillated cellulose is produced by at least one chemical modification selected from the group consisting of acetylation, alkyl esterification, complex esterification, β-ketoesterification, alkyl carbamation, and aryl carbamation.

4. The studless winter tire according to any one of claims 1 to 3,
   wherein the rubber component comprises, based on 100% by mass of the rubber component, 30% to 85% by mass of natural rubber and 10% to 70% by mass of polybutadiene rubber.


**Patentansprüche**

1. Spikeloser Winterreifen, umfassend eine von einer Kautschukzusammensetzung für spikelose Winterreifen gebildete Laufflächenkrone, die Kautschukzusammensetzung umfassend:

   eine Kautschukkomponente;
   eine chemisch modifizierte mikrofibrilierte Zellulose;
   Carbon Black; und
   Silika,
   die chemisch modifizierte mikrofibrilierte Zellulose mit einem durchschnittlichen Faserdurchmesser von 0,1 μm oder weniger,
   die Kautschukkomponente aufweisend eine kombinierte Menge an Naturkautschuk und Polybutadienkautschuk von 30 Masse-% bis 100 Masse-% basierend auf 100 Masse-% der Kautschukkomponente,
   die Kautschukzusammensetzung umfassend pro 100 Masse-Teile der Kautschukkomponente 1 Masse-Teil bis 10 Masse-Teile der chemisch modifizierten mikrofibrillierten Zellulose, 10 Masse-Teile bis 80 Masse-Teile des Carbon Blacks und 10 Masse-Teile bis 80 Masse-Teile des Silikas.

2. Spikeloser Winterreifen nach Anspruch 1,
   wobei die chemisch modifizierte mikrofibrillierte Zellulose einen durchschnittlichen Faserdurchmesser von 0,05 μm oder weniger aufweist.

3. Spikeloser Winterreifen nach Anspruch 1 oder 2,
   wobei die chemisch modifizierte mikrofibrillierte Zellulose hergestellt ist durch zumindest eine chemische Modifikation ausgewählt aus der Gruppe bestehend aus Acetylierung, Alkylveresterung, Komplexveresterung, β-Ketoveresterung, Alkylcarbamierung, und Arylcarbamierung.

4. Spikeloser Winterreifen nach einem der Ansprüche 1 bis 3,
   wobei die Kautschukkomponente umfasst, basierend auf 100 Masse-% der Kautschukkomponente, 30 Masse-% bis 85 Masse-% an Naturkautschuk und 10 Masse-% bis 70 Masse-% an Polybutadienkautschuk.

**Revendications**

1. Pneu hiver sans crampons, comprenant une bande de roulement de chape formée à partir d'une composition de caoutchouc pour pneus hiver sans crampons,
   la composition de caoutchouc comprenant :

   un constituant de caoutchouc ;
   une cellulose microfibrillée chimiquement modifiée ;
   du noir de carbone ; et
   de la silice,
   la cellulose microfibrillée chimiquement modifiée ayant un diamètre moyen de fibre de 0,1 $\mu$m ou inférieur,
   le constituant de caoutchouc présentant une quantité combinée de caoutchouc naturel et de caoutchouc de polybutadiène de 30 % à 100 % en masse rapporté à 100 % en masse du constituant de caoutchouc,
   la composition de caoutchouc comprenant, pour 100 parties en masse du constituant de caoutchouc, de 1 à 10 parties en masse de la cellulose microfibrillée chimiquement modifiée, de 10 à 80 parties en masse du noir de carbone, et de 10 à 80 parties en masse de la silice.

2. Pneu hiver sans crampons selon la revendication 1,
   dans lequel la cellulose microfibrillée chimiquement modifiée présente un diamètre moyen de fibre de 0,05 $\mu$m ou inférieur.

3. Pneu hiver sans crampons selon la revendication 1 ou 2,
   dans lequel la cellulose microfibrillée chimiquement modifiée est produite par au moins une modification chimique choisie dans le groupe consistant en acétylation, estérification alkylique, estérification complexe, $\beta$-cétoestérification, carbamation alkylique, et carbamation arylique.

4. Pneu hiver sans crampons selon l'une quelconque des revendications 1 à 3,
   dans lequel le constituant de caoutchouc comprend, rapporté à 100 % en masse du constituant de caoutchouc, de 30 % à 85 % en masse de caoutchouc naturel et de 10 % à 70 % en masse de caoutchouc de polybutadiène.

**EP 3 308 975 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009091482 A
- JP 2015174952 A